# EUROPEAN PATENT SPECIFICATION

(11) **EP 1 733 804 B1**
(45) Date of publication and mention of the grant of the patent: **19.08.2009**
(21) Application number: 06397010.7
(22) Date of filing: 12.06.2006
(51) Int. Cl.: B05D 7/08, B05D 7/00, B27K 3/15

(54) **Coated wood product and method for its manufacture**
Beschichtetes Holzprodukt und Verfahren zur dessen Herstellung
Produit du bois revetu et procédé associé

(30) Priority: 16.06.2005 FI 20055318
(43) Date of publication of application: 20.12.2006
(73) Proprietor: Metsäliitto Osuuskunta, 02100 Espoo (FI)
(72) Inventor: Hillberg, Jukka, 33720Tampere (FI); Järvelä, Pentti, 15900, LAHTI (FI); Järvelä, Pirkko, 15900, Lahti (FI)
(74) Representative: Hakola, Unto Tapani

(56) References cited:
- EP-A- 1 092 479
- US-A- 4 596 623
- US-A1- 2002 050 116

## Description

The invention relates to a method for coating a wood product with a thermoplastic layer.

Wood and wood-based materials are a major group of construction materials used by man. Conventionally, wood has many good properties, such as light weight, high characteristic strength, good impact resistance, resistance to cold, fatigue resistance, resistance to UV radiation (except for colour changes), connectivity, and workability. However, wood also has properties which limit the use of wood in many applications. These include the softness of the surface of wood, the anisotropicity of the structure of wood, the absorption of water into wood, the decay of moist wood, and the deformation of wood due to moisture.

To minimize the poor properties of wood, it has been commonplace to coat various wood materials, even for a long time, with other materials, of which plastic materials are a group that has been used very widely. For example, the coating of wood with various thermosetting plastic materials (including e.g. phenolic, polyester and epoxy resins) has been used for a long time. A problem in the use of these materials is the narrow selection available. Thermosetting plastic materials also complicate the recyclability of wood-based products. On the other hand, it is possible to coat wood with thermoplastics. Thermoplastics can provide wood wi th properties which improve the usability of wood substantially. The properties of thermoplastics can be modified using various blends which can be used to change the hardness, wear resistance, moisture permeability and other properties of the surface.

Thermoplastics are an attractive alternative for the coating of wood products, thanks to the wide selection and a certain degree of recyclability (thanks to the remeltability of the thermoplastics). For coating a wood product, the thermoplastic is applied onto the surface of the wood material in molten state, after which it is solidified and forms a solid film protecting the wood. In the molten state, the thermoplastic is also intended to create a bond between the wood and the plastic to keep the plastic adhered to the wood after the plastic has become solid.

However, a problem in the coating of wood by a thermoplastic lies right in the adhesion between the wood and the thermoplastic. This problem is aggravated by the chemical inertness and high melt viscosity of the thermoplastics, preventing the plastic from penetrating properly into the structure of wood. This adhesion problem has been solved by modifying the thermoplastic; for example, when polypropylene is used, attempts have been made to solve the adhesion problem by using polypropylene grafted with maleic anhydride (maleated polypropylene).

In spite of the modifications, it has turned out problematic that the overall adhesion is not sufficiently good. Even though the thermoplastic layer could be adhered to the wood surface in a way that is satisfactory for the use, the problem of insufficient overall adhesion will remain. The connection between the plastic layer and the wood may fracture underneath a thin wood layer, due to the fibrous structure of the wood. This fracturing is further due to the basic problem which is the poor penetration of thermoplastics into wood in the molten state, which is due to the basic intrinsic properties (high melt viscosity) of thermoplastics.

Furthermore, moisture plays an important role in the use of the wood. Even though the thermoplastic film as such forms a shield against moisture, some moisture may be gradually diffused through the film into the wood. On the other hand, some moisture remaining in the wood may be transferred to the interface between the film and the wood, weakening the adhesion.

The following publications teach various ways of coating wood materials with plastics:

US 6,601,357:
A thermoplastic film is placed on a wood plank by means of an adhesive (for example, an epoxy or reactive hot-melt urethane) penetrating into the wood. The most advantageous thermoplastic choice mentioned is PVC, and the invention is intended for laminating finished PVC films onto a wood plank.

US 5,273,787:
An epoxy adhesive is cured partly on the surface of wood, whereafter a protective layer is applied on it. A protective layer of the same epoxy resin is mentioned as an actual example.

EP 1 159 117:
A heat-activated adhesive is applied onto the edge of a wooden board before a thermoplastic material with a circular cross-section is extruded and formed flat onto the edge. A heat-activated solvent-based polyurethane before the extrusion of a strip of soft PVC is mentioned particularly.

US 2004/0209085:
A base adhesive layer based on an aqueous polyurethane dispersion or a solvent-free hot-melt adhesive (polyurethane or polyamide) is applied onto the edge of a wooden board before the extrusion of the strip. A polyamide hot-melt adhesive and a PVC strip are mentioned in example 1, and an EVA strip without pre-treatment with an adhesive is mentioned in example 2. In each case, the strip is applied onto the edge of the wooden board in a warm, deformable state.

The coating of wood with a thermoplastic simultaneously when the film is formed of a molten raw material, *i.e.* by direct extrusion onto the surface of wood, is an advantageous industrial alternative, because the film does not need to be manufactured separately. The coating by glueing a separate film is also an operation which requires precision and may cause material losses. A problem in such solutions based on the direct extrusion of the plastic is that they do not provide a sufficient moisture barrier (blocking of the transfer of moisture between the wood and the coating), and furthermore, the adhesion to the wood in the depth direction remains poor.

The aim of the invention is to eliminate the above-mentioned drawbacks and to present a method for coating a wood product in which the overall adhesion is good and is not limited solely to the interface between the thermoplastic material and the wood material, and which also provides a sufficient moisture barrier between the thermoplastic coating and the wood. To attain this aim, the method according to the invention is primarily characterized in that before the application of the thermoplastic layer, an epoxy resin, is applied onto the same surface, and curing of the epoxy resin is started or completed by means of heat released by the thermoplastic layer applied in the molten state. The epoxy resin, which has a low viscosity, has also penetrated into the wood underneath the coating and has cured, providing an effective moisture barrier and a good adhesion between the thermoplastic and the wood. This is a curing reaction typical of the epoxy resin, whereby a solid material is formed from a liquid composition.

In the following, the invention will be described in more detail with reference to the appended drawing that shows schematically the method for coating wood according to the invention in a side view.

The figure shows a method for coating a wood piece 1, in this case a wooden board, in which a plastic layer 2 is applied onto the narrow edge of the wooden board by extrusion. The plastic layer 2 is applied in a known manner in the molten state onto the surface of the wood piece 1 from the die of an extruder 3, after which it will solidify as a solid protective film as the surface moves forward with respect to the extruder. For the sake of clarity, the extruder 3 is illustrated in a cross section. The plastic layer 2 is applied onto the wood surface so that the plastic layer 2 is ready shaped for the shape of the wood surface, and it does not need to be shaped separately afterwards. As shown in the drawing, the die of the extruder 3 is constructed in such a way that it extends in the direction of the surface to be coated, as an extension of the feeding channel of the molten material, as a channel whose one wall is formed by the wall of the extrusion die and the opposite wall by the material to be coated, *i.e.* the surface of the wood piece 1. In this way, the plastic in the molten state enters the surface of the wood directly from the feeding channel, and the thickness of the layer is determined by the distance between the wall of the die and the wood surface. The cross-sectional shape of the wall of the die simultaneously determines the shape of the outer surface of the plastic layer.

The basic polymer for the plastic that forms the plastic layer 2 may be a polymer commonly used for coating wood and melt-processable thanks to its thermoplastic properties. Most common thermoplastics for this purpose include polyamide based or polyolefin based (for example PE, PP, or their copolymers) plastics. When polyolefin (polyethylene or polypropylene or their copolymer) is used, it is preferably grafted by a maleic anhydride (so-called maleated polyolefin), which improves the adhesion of the plastic.

The processing temperature of the thermoplastic (the temperature at which it is introduced onto the surface of the wood piece) is preferably from 100 to 250°C. Too high temperatures may have a harmful effect on the wood; that is, the wood may "burn". A short retention time above said temperature during the coating process is not necessarily harmful to the wood, and consequently it is also possible to use polymers whose melt-processing temperature is above said upper limit. If problems are caused by the high melting temperature of the thermoplastic used, the plastic material may be blended with a substance lowering the processing temperature, for example a thermosetting plastic, if necessary.

Before the application of the thermoplastic, an epoxy resin is applied onto the wood piece 1. The resin is applied at the location E marked with an arrow, and the resin remaining on the surface to be coated after this is indicated with the reference numeral 4 in the drawing. According to the principle shown in the drawing, there are wood pieces 1 one after another in the coating line in such a way that the surface to be coated is first passed through a resin feeding device, after which the piece moves on to thermoplastic coating, where it is moved with respect to the extruder 3. The retention time between the point E and the extruder 3 is selected so that there is enough time for a possible solvent in the resin to evaporate and for the resin to penetrate into the wood before the application of the thermoplastic. It is advantageous that the curing reaction of the resin starts already at this stage when the resin is in the wood (a pre-curing time of a given length), before the application of the thermoplastic on the wood, after which the curing is completed when the thermoplastic is on top of the wood. The resin has a significantly lower viscosity than the thermoplastic applied in the molten state, and it can penetrate the porous structure of the wood in the depth direction, thereby forming a thick mediating layer. The penetration of the resin is illustrated with a broken line.

The epoxy resin may be of any kind. It may be a bicomponent resin, whereby the resin and the hardener are mixed in a defined ratio shortly before or at the time of the application. It may also be of a kind that is activated first at a higher temperature (hot-curable), which means that it is cured (cross-linked) at a temperature clearly higher than room temperature, where its hardening agents are activated. When such a resin is used, it is possible that only the heat provided by the molten thermoplastic starts the curing reaction. It is possible, for example, to use such a resin in which the heat-activatable hardening agent is provided ready in the mixture. The pre-curing time and temperature are selected according to the kind of the resin. Thus, it can be ensured that the resin will not harden too much before the application of the thermoplastic layer, which would be harmful for the penetration into the wood and for the adhesion to the thermoplastic.

The epoxy resin used may be, in principle, any substance that is spreadable in liquid state and contains molecules containing two epoxy groups and a hardener (for example an amine, an alcohol or acid anhydride compound and a possible solvent). The curing reacion is cross-linking that is typical of epoxy resins. With a solvent, the viscosity of the resin can be reduced further. The vi scosity of the resin to be applied is typically less than 15000 cP at room temperature.

When the molten thermoplastic comes onto the epoxy resin from the extruder 3, the heat of the molten plastic material accelerates or starts the curing of the epoxy resin, and simultaneously the epoxy resin binds the thermoplastic strongly to the wood. It is possible that the heat released by the molten thermoplastic material not only accelerates/ starts the curing of the epoxy resin applied earlier but also has a physical effect on the resin penetrated into the wood by lowering its viscosity temporarily and thereby improving further its penetration into the wood. Consequently, it is also possible that the resin used is curable in course of time at room temperature, but the heat introduced by the thermoplastic accelerates the curing to a multiple rate.

The epoxy resin does not only penetrate to a given depth underneath the surface to be coated and adhere well to the wood on one hand and to the thermoplastic polymer on he other hand, forming a strong bond between the thermoplastic and the wood, but it also acts as a moisture barrier. In this way, the epoxy can act as a barrier structure protecting the wood from moisture in a more efficient way than polyurethane adhesives that have been used previously to improve the adhesion between the thermoplastic and the wood.

After the application of the thermoplastic in the molten state onto the epoxy resin, the thermoplastic can be actively cooled, taking into account the fact that the cooling must not, however, be so fast that the heat of the thermoplastic does not have a sufficient effect on the curing of the epoxy resin.

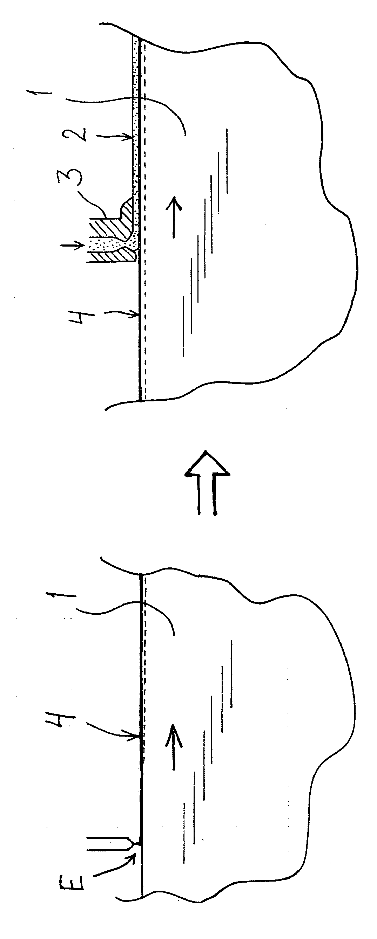

Figure 1 shows, as an example of a wood piece 1, a wooden board, whose edge surface is protected with an epoxy barrier and thermoplastic layer, wherein this board can be coated in another way with respect to the planar surfaces. In practice, it is possible to first treat all the edges of the wooden board with the epoxy resin, and then correspondingly to coat all the edges with a thermoplastic. The wooden board may consist of whole wood, or it may be composed of wooden elements, such as plywood or chipboard. It may also comprise another material, as long as the surface to be coated consists of a wood material. The invention is particularly suitable for protecting the edge of a plywood board composed of veneers with a thermoplastic coating. However, the invention can also be used for coating larger planar wooden surfaces and wooden pieces with a profiled form in an analog manner.

The figure shows a method (coating line) intended for industrial production, in which the surface to be coated moves first past the point E of applying the epoxy resin and then, after the delay required by the pre-curing time, past the extruder 3, but the method can also be used in other ways. A manual implementation is also feasible, in which the epoxy resin and the molten thermoplastic material are applied onto the wood surface to be coated in successive steps, the wood pieces remaining stationary.

The invention will be illustrated by the following example which does not limit the invention.

### Example:

The piece to be coated consisted of birch plywood having a thickness of 27 mm and consisting of 19 veneer layers, in which the direction of the veneers alternated at an angle of 90 degrees to each other, which is a typical structure in plywood. The wood surface to be coated was the edge of the plywood.

Onto the edge, a resin was applied, consisting of a bisphenol A based 100% reactive solvent-free epoxy resin, whose hardener was a low-viscosity solvent-free reactive polyamide. The ratio between the resin and the hardener was 3:2. The precuring time was 20 min before bringing the thermo plastic onto the wood surface.

The polyolefin used was an extrusion coating grade polypropylene grafted with maleic anhydride. The extrusion conditions were: cylinder temperatures between 220 and 240°C, die at 250°C.

In a reference test, the same polyolefin was applied onto the edge of plywood with the same structure, under the same conditions, but without the pre-application of the epoxy resin.

The force required for releasing the polyolefin coating (relative numerical values) was the following:

| | |
|---|---|
| Test | 200 units |
| Reference | 100 units. |

## Claims

1. A method for coating a wood product, in which a thermoplastic in molten state is applied onto the surface of the wood product to be coated, which thermoplastic solidifies to a solid thermoplastic layer (2) after the application, **characterized in that** before the application of the thermoplastic layer, an epoxy resin is applied onto the same surface, and curing of the epoxy resin is completed or started underneath the thermoplastic layer by means of heat released by the thermoplastic layer applied in the molten state.

2. The method according to claim 1, **characterized in that** the epoxy resin is allowed to penetrate to a given depth in the wood before its curing.

3. The method according to claim 1 or 2, **characterized in that** the thermoplastic to be applied in the molten state is based on a polyamide or a polyolefin, in the case of polyolefin preferably a polyolefin grafted with maleic anhydride.

4. The method according to any of the preceding claims 1 to 3, **characterized in that** the wood product (1) to be coated is a wooden board whose edge is coated with a thermoplastic in molten state, for example plywood.

5. The method according to any of the preceding claims 1 to 4, **characterized in that** the thermoplastic layer (2) is supplied from the die of an extruder (3), shaped ready for the shape of the surface of the wood.

6. The method according to any of the preceding claims 1 to 5, **characterized in that** the coating is performed by an extruder (3) feeding molten thermoplastic material, the die of the extruder extending in the direction of the surface to be coated, the surface to be coated forming the opposite wall of the die.

## Patentansprüche

1. Verfahren zur Beschichtung eines Holzerzeugnisses, bei dem ein Thermoplast im schmelzflüssigen Zustand auf die zu beschichtende Oberfläche des Holzerzeugnisses aufgetragen wird, wobei der Thermoplast nach dem Auftrag zu einer festen thermoplastischen Schicht (2) aushärtet,
**dadurch gekennzeichnet,**
**dass** vor dem Auftrag der thermoplastischen Schicht auf dieselbe Oberfläche ein Epoxidharz aufgetragen wird, und dass das Aushärten des unterhalb der thermoplastischen Schicht aufgetragenen Epoxidharzes durch die Wärme, die von der im schmelzflüssigen Zustand aufgetragenen thermoplastischen Schicht abgegeben wird, eingeleitet oder vollendet wird.

2. Verfahren nach Anspruch 1,
**dadurch gekennzeichnet,**
**dass** das Epoxidharz vor dem Aushärten bis zu einer vorgegebenen Tiefe in das Holz eindringt.

3. Verfahren nach Anspruch 1 oder 2,
**dadurch gekennzeichnet,**
**dass** der im schmelzflüssigen Zustand aufzutragende Thermoplast auf Polyamid- oder Polyolefinbasis hergestellt ist, wobei im Falle des Polyolefins vorzugsweise ein Polyolefin eingesetzt wird, das mit einem Maleinsäureanhydrid aufpolymerisiert ist.

4. Verfahren nach einem der Ansprüche 1 bis 3,
**dadurch gekennzeichnet,**
**dass** es sich bei dem zu beschichtenden Holzerzeugnis (1) um ein Holzbrett, beispielsweise ein Sperrholzbrett, handelt, dessen Kanten mit einem Thermoplast im schmelzflüssigen Zustand beschichtet werden.

5. Verfahren nach einem der Ansprüche 1 bis 4,
**dadurch gekennzeichnet,**
**dass** die thermoplastische Schicht (2) derart aus der Austrittsdüse eines Extruders (3) herausgepresst wird, dass sie genau zur Form der Holzoberfläche passend ausgebildet ist.

6. Verfahren nach einem der vorangehenden Ansprüche 1 bis 5,
**dadurch gekennzeichnet,**
**dass** die Beschichtung durch einen Extruder (3) vorgenommen wird, der das schmelzflüssige thermoplastische Material zuführt, wobei die Austrittsdüse des Extruders in Richtung der zu beschichtenden Oberfläche ragt und die zu beschichtende Oberfläche die gegenüberliegende Wand der Austrittsdüse bildet.

## Revendications

1. Procédé pour revêtir un produit à base de bois, dans lequel une matière thermoplastique à l'état fondu est appliquée sur la surface du produit à base de bois à revêtir, ladite matière thermoplastique se solidifiant pour donner une couche thermoplastique solide (2) après l'application, **caractérisé en ce qu'**avant l'application de la couche thermoplastique, une résine époxy et appliquée sur la même surface, et la prise de la résine époxy est terminée ou démarrée au-dessous de la couche thermoplastique au moyen de la chaleur dégagée par la couche thermoplastique appliquée à l'état fondu.

2. Procédé selon la revendication 1, **caractérisé en ce que** la résine époxy est amenée à pénétrer jusqu'à une profondeur donnée dans le bois avant sa prise.

3. Procédé selon la revendication 1 ou 2, **caractérisé en ce que** la matière thermoplastique appliquée à l'état fondu est basée sur un polyamide ou une polyoléfine, dans le cas d'une polyoléfine de préférence une polyoléfine greffée avec de l'anhydride maléique.

4. Procédé selon l'une quelconque des revendications précédentes 1 à 3, **caractérisé en ce que** le produit à base de bois (1) à revêtir est une plaque en bois dont la bordure est revêtue d'une matière thermoplastique à l'état fondu, par exemple du contreplaqué.

5. Procédé selon l'une quelconque des revendications précédentes 1 à 4, **caractérisé en ce que** la couche thermoplastique (2) est fournie depuis la filière d'une extrudeuse (3) dont la forme est adaptée à la forme de la surface du bois.

6. Procédé selon l'une quelconque des revendications précédentes 1 à 5, **caractérisé en ce que** le revêtement est exécuté par une extrudeuse (3) qui alimente une matière thermoplastique fondue, la filière de l'extrudeuse s'étendant dans la direction de la surface à revêtir, la surface à revêtir formant la paroi opposée de la filière.
